# EUROPEAN PATENT APPLICATION

(11) **EP 4 671 111 A1**
(43) Date of publication of application: **31.12.2025**
(21) Application number: 24760164.4
(22) Date of filing: 08.02.2024
(51) Int. Cl.: B63B 79/40, H04W 4/40, H04W 28/06

(54) **NAVIGATION INFORMATION RECEIVING DEVICE, NAVIGATION INFORMATION TRANSMITTING DEVICE, NAVIGATION INFORMATION TRANSMITTING/RECEIVING SYSTEM, NAVIGATION INFORMATION RECEIVING METHOD, NAVIGATION INFORMATION TRANSMITTING METHOD, NAVIGATION INFORMATION RECEIVING PROGRAM, AND NAVIGATION INFORMATION TRANSMITTING PROGRAM**

(30) Priority: 21.02.2023 JP 2023025104
(71) Applicant: FURUNO ELECTRIC CO., LTD., Nishinomiya-City, Hyogo 662-8580 (JP)
(72) Inventor: YAMASAKI, Takayuki, Nishinomiya-City, Hyogo 6628580 (JP)
(74) Representative: Müller Hoffmann & Partner
(86) International application number: PCT/JP2024/004353
(87) International publication number: WO 2024/176862

(57) **Abstract**

To make it possible to analyze navigation information messages even when the message format is changed, without requiring updating software or equipment. A navigation information receiving device 10 comprises: a receiving unit 101 that receives a navigation information message; a determining unit 102 that determines whether the received navigation information message is a formatted message or a non-formatted message; a format storage unit 104 that stores format information included in the formatted message; and an analyzing unit 103 that analyzes the contents of the non-formatted message on the basis of the format information stored in the format storage unit 104.

## Description

### BACKGROUND

### Technical Field

The disclosure relates to transmission and reception of navigation information, particularly to a format for transmission and reception of navigation information.

### Conventional Art

In AIS (automatic identification system for ships) messages, one of the messages for transmitting and receiving navigation information, a message type called a binary message type is defined, and formats are defined for each region, allowing for individual operations by region.

### Citation List

### Patent Document

[Non-Patent Document 1] IEC 61993-2:2012 Standard Maritime navigation and radio communication equipment and systems-Part2

### SUMMARY

### Technical Problem

However, for example, in the case of individual operation of binary messages in AIS messages, if the format of binary messages included in AIS messages is changed, it is necessary to update the software to correspond to the new format. In addition, users need to introduce equipment that corresponds to the new format, and cannot start operation with the new format until the equipment is introduced.

Therefore, the purpose of the disclosure relates to a technology that enables analysis of navigation information messages even in the case where the message format is changed, without requiring software or equipment updates.

### Solution to Problem

The navigation information reception device of this disclosure includes a reception part configured to receive a navigation information message; a determination part configured to determine whether the received navigation information message is a format message or a non-format message; a format storage part configured to store format information included in the navigation information message in a case where the received navigation information message is determined to be the format message; and an analysis part configured to analyze content of the navigation information message based on the stored format information in a case where the received navigation information message is determined to be the non-format message and where the format information is stored.

In this configuration, if the message is a format message, it is stored as a format, and if it is a non-format message, it is analyzed as a navigation information message.

According to this disclosure, navigation information messages can be analyzed even in a case where the message format is changed, without requiring software or equipment updates.

### BRIEF DESCRIPTION OF THE DRAWINGS

FIG. 1 is a diagram showing an overview of message reception from a base station according to the first embodiment of the disclosure.
FIG. 2 is a diagram showing an example of a template for a binary message according to the first embodiment of the disclosure.
FIG. 3 is a diagram showing an example of a format according to the first embodiment of the disclosure.
FIG. 4 is a functional block diagram of an AIS reception device according to the first embodiment of the disclosure.
FIG. 5 is a functional block diagram of an AIS transmission device according to the first embodiment of the disclosure.
FIG. 6 is a flowchart at the time of reception of an AIS message according to the first embodiment of the disclosure.
FIG. 7 is a flowchart at the time of creation of an AIS message according to the first embodiment of the disclosure.
FIG. 8 is a diagram showing an overview of message reception from a ship according to the second embodiment of the disclosure.
FIG. 9 is a functional block diagram of an AIS reception device according to the third embodiment of the disclosure.

### DESCRIPTION OF THE EMBODIMENTS

### (First Embodiment)

The navigation information reception device, navigation information transmission device, and navigation information transmission and reception system according to the first embodiment of the disclosure will be described with reference to the figures. The following description applied to AIS, but it may also be applied to VDES (VHF Data Exchange System).

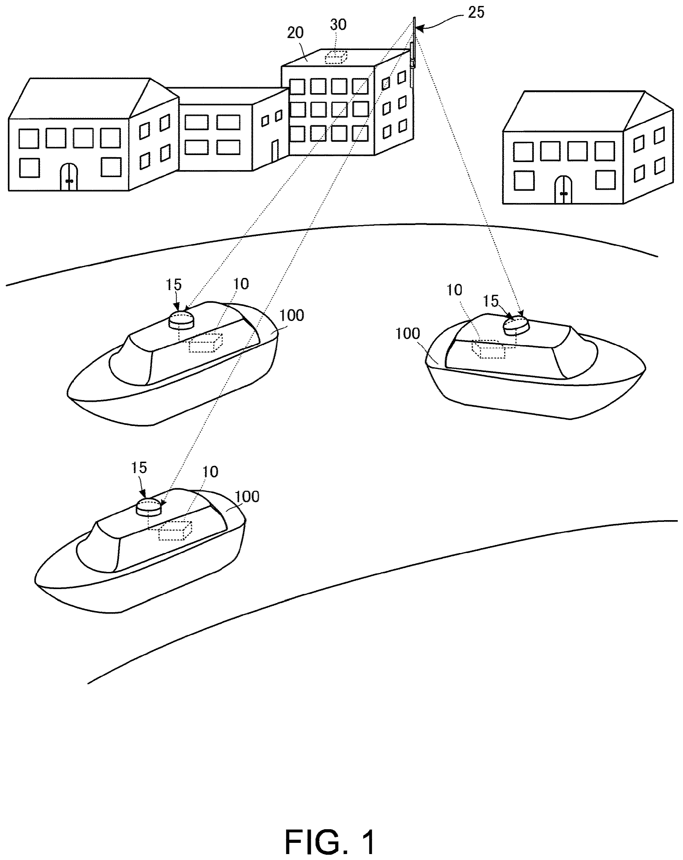

As shown in FIG. 1, an AIS system (navigation information transmission and reception system) includes an AIS transmission device (navigation information transmission device) 30 included in a base station 20, and an AIS reception device (navigation information reception device) 10 included in a waterborne vehicle (ship) 100. A waterborne vehicle 100 equipped with this AIS reception device 10 is a mobile station of the AIS system.

An AIS transmission device 30 creates an AIS message (navigation information message) and transmits it from an antenna 25 of the base station 20. The AIS reception device 10 receives the AIS message with an antenna 15. As a result, the waterborne vehicle 100 receives the AIS message from the base station 20.

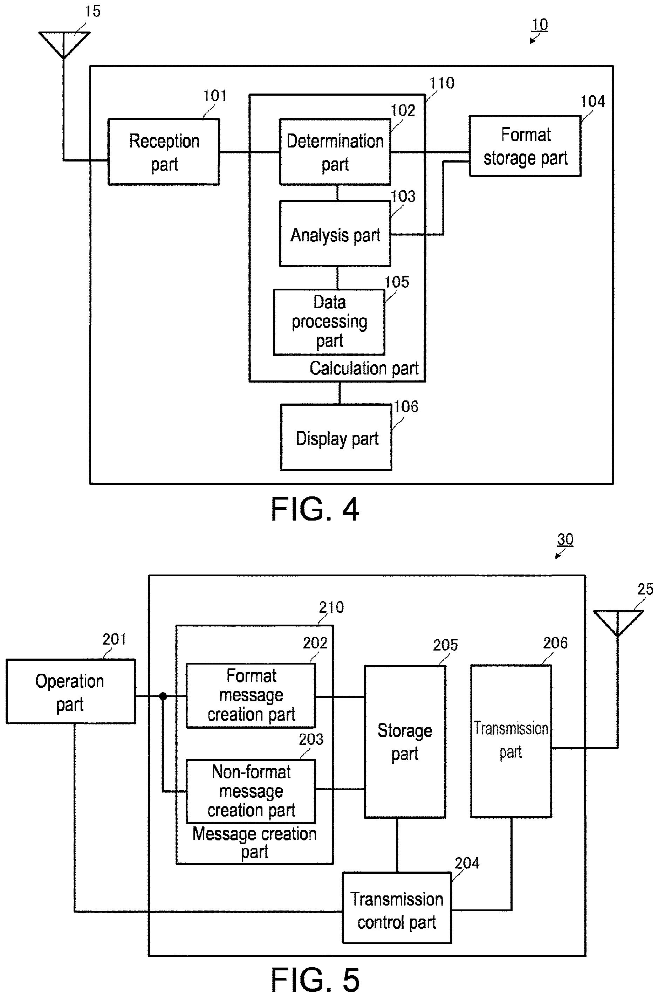

The reception of AIS messages will be described using FIG. 4. As shown in FIG. 4, the AIS reception device 10 includes a reception part 101, a calculation part 110, a format storage part 104, and a display part 106. The calculation part 110 includes a determination part 102, an analysis part 103, and a data processing part 105. In addition, the reception part 101 of the AIS reception device 10 is connected to the antenna 15.

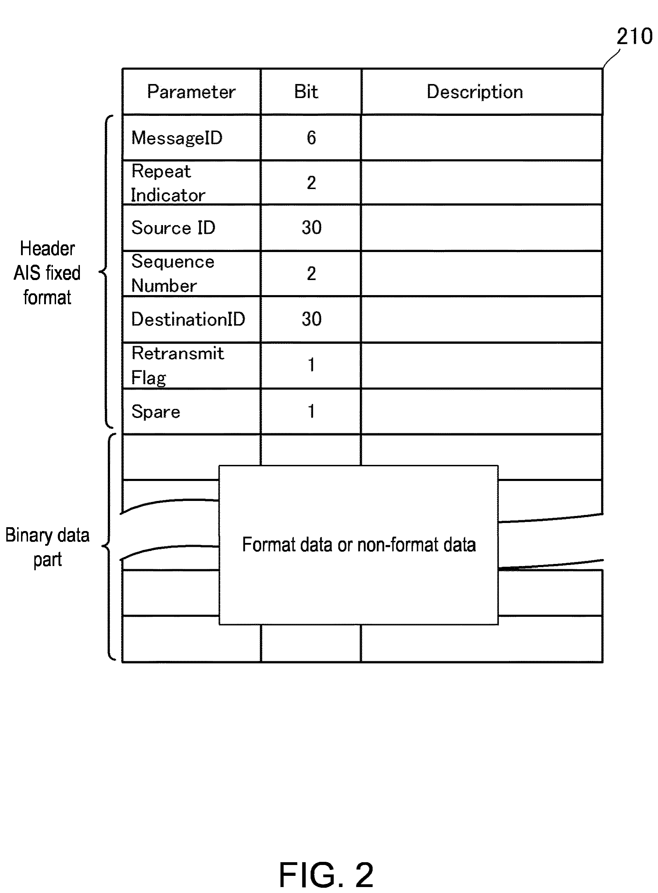

FIG. 2 shows an example of a template for a binary message among AIS messages. Binary messages are defined, for example, in ITU-RM1371 by AIS message types 6, 8, etc. The example shown is message type 6. A binary message includes a header and a binary data part. In the header, attributes of data are defined in advance, and parameters, number of bits, etc. are defined as shown in FIG. 2, for example.

The content of the binary data part is defined in various data formats defined by IMO and each region. Similarly, data attributes and other properties may be appropriately defined to exchange information. The binary data part may be configured as a format message or a non-format message.

A format message is a binary message that includes data (local data format data) defining a data format in a local or specific range in the binary data.

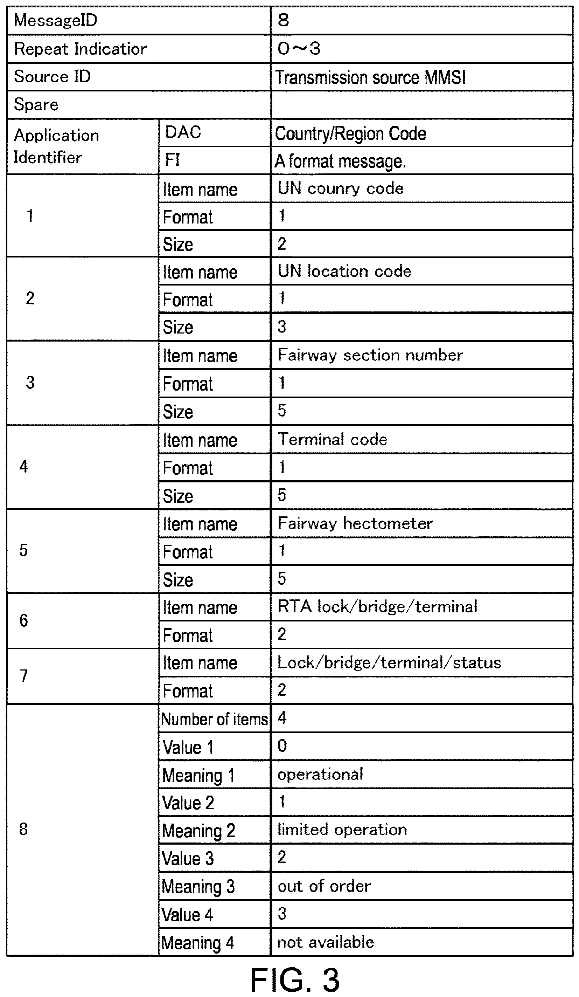

FIG. 3 shows an example of a format message. Here, the format of binary message type 8 is used. In the case of operating in a data format by region, it is possible to operate using identification symbols specific to DAC (Designated Area Code) and FI (Function ID). Moreover, a local data format is defined in the binary data. In the example of FIG. 3, the 8 data formats are defined. The example formats indicate 1 as string type and 2 as time type.

A non-format message is a binary message in which information is recorded in binary data using the defined local data format included in the format message.

The reception part 101 receives AIS messages via the antenna 15. The reception part 101 outputs the AIS messages to the determination part 102.

The determination part 102 determines whether the received AIS message is a binary message. Whether it is a binary message or not may be identified by a message identifier (message ID), etc. In the case of AIS messages other than binary messages, normal data processing is performed in the data processing part 105. In the case of a binary message, whether it is a format message or a non-format message is determined. This determination may be made by providing a flag in the header, etc. recorded in the binary data. Moreover, a specific number/symbol of FI in the header information may be defined as a format message and operated. In addition, an identification flag indicating whether the message is a format message or not may be set in the binary data. In the case where the determination part 102 determines that the AIS message is a format message, it stores the local data format (format information) included in the format message in the format storage part 104.

The analysis part 103 analyzes the content of the non-format message. At this time, the analysis part 103 uses the local data format stored in the format storage part 104 for analysis. In the case where the analysis is possible, the analysis part 103 displays the content of the non-format message on the display part 106. In addition, in the case where the analysis part 103 is unable to analyze the non-format message, an error message or the like may be displayed.

As a result, in the case of individually operating binary messages for each region, even if the format of the binary data is changed, the binary data may be analyzed with the changed format.

Moreover, only the reception of AIS messages is shown here, but in the case where the waterborne vehicle 100 performs transmission by AIS, binary data of AIS messages is creased using this local format.

The transmission of AIS messages will be described using FIG. 5. As shown in FIG. 5, the AIS transmission device 30 includes an operation part 201, a message creation part 210, a transmission control part 204, a storage part 205, and a transmission part 206. The message creation part 210 includes a format message creation part 202 and a non-format message creation part 203. In addition, the AIS transmission device 30 includes an antenna 25.

The operation part 201 receives operation inputs necessary for creating AIS messages. The message creation part 210 creates AIS messages according to the operation inputs. The format message creation part 202 creates format data according to the operation input of the operation part 201. The non-format message creation part 203 creates non-format data according to the operation input of the operation part 201.

The transmission control part 204 controls the transmission of AIS messages including binary messages, and conveys it on to the transmission part 206 for periodic or immediate transmission. The transmission part 206 transmits AIS messages via the antenna 25.

With this configuration, the AIS transmission device 30 transmits AIS messages including the created format messages or non-format messages.

In the case of creating a local data format, the user performs the operation of creating a local format from the operation part 201. The format message creation part 202 receives the instruction for format creation and calls up binary data of an AIS message, for example, as shown in FIG. 3. The user defines the local data format for the binary data using a template of the binary data by means of the operation part 201. The format message creation part 202 stores the local data format defined in the binary data in the storage part 205.

In the case of creating non-format data, the user performs the operation of creating non-format data from the operation part 201. The non-format message creation part 203 receives the instruction for non-format creation and calls up a template of binary data.

The user performs recording corresponding to the local data format using the template of binary data by means of the operation part 201. The non-format message creation part 203 stores the recorded binary data in the storage part 205. The creation of non-format data is not limited thereto, and the data may be created from scratch or automatically generated.

At the time of transmission of AIS messages, the transmission control part 204 searches for format messages or non-format messages from the storage part 205 according to the transmission timing.

At the transmission timing of format messages, the transmission control part 204 extracts the format message from the storage part 205, sets a flag indicating a format message in the header, and conveys it on to the transmission part 206. The transmission part 206 generates an AIS message including the format message and transmits it from the antenna 25.

Moreover, AIS messages including format messages are repeatedly transmitted at particular time intervals. As a result, even if reception fails once, the waterborne vehicle 100 may obtain the format message, enabling communication using the local data format.

At the transmission timing of non-format messages, the transmission control part 204 extracts the non-format message from the storage part 205, sets a flag indicating a non-format message in the header, and conveys it on to the transmission part 206. The transmission part 206 generates an AIS message including the non-format message and transmits it from the antenna 25. Moreover, the disclosure is not limited thereto; the message may be transmitted immediately.

Moreover, in the above description, a configuration in which multiple functional parts perform reception, analysis, and transmission of AIS messages is shown. However, the processing may be programmed and stored, and the program may be read and executed by a calculation processing device such as a computer.

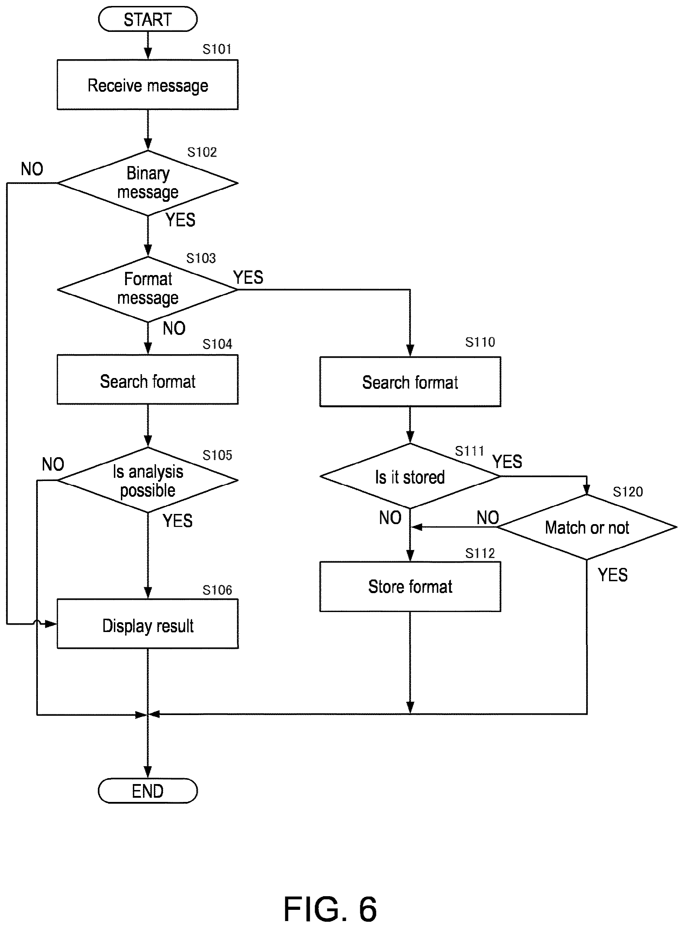

FIG. 6 is a flowchart showing a case where AIS messages is received according to the first embodiment of the disclosure.

The AIS reception device 10 receives an AIS message (S101). The AIS reception device 10 determines whether the received AIS message is a binary message or not (S102). In the case where the received AIS message is not a binary message (S102: No), normal message analysis processing is performed and the result is displayed. In the case where the received AIS message is a binary message (S102: Yes), whether or not the binary data of the received binary message is a format message (S103) is determined. In the case where the binary data of the binary message is a non-format message, that is, not a format message (S103: No), a search is performed to see if a corresponding local data format exists (S104).

The AIS reception device 10 analyzes the non-format message using the searched local data format and determines whether normal analysis is possible (S105). In the case where the non-format message may be analyzed (S105: Yes), the AIS reception device 10 displays the analysis result (S106).

In addition, in the case where the non-format message cannot be analyzed (S105: No), the AIS reception device 10 ends the processing. In this case, the AIS reception device 10 may also notify that analysis is not possible.

On the other hand, in the case where the binary message is a format message, that is, not a non-format message (S103: Yes), the AIS reception device 10 searches for a local data format (S110).

The AIS reception device 10 determines whether the local data format included in the received format message is stored (S111). In the case where the local data format is not stored (S111: No), the AIS reception device 10 stores the local data format (S112).

In the case where the local data format is already stored (S111: Yes), the AIS reception device 10 confirms whether the local data formats match or not (S120), and if they to (S120: Yes), the processing is ended.

If the local data formats do not match (S120: No), the AIS reception device 10 overwrites and stores the format. Alternatively, it may store the format anew without overwriting. In this case, management may be performed using timestamps or version information. By doing so, the AIS reception device may store the necessary local data format, and also store the latest local data format by storing it anew even when the local data format is updated, making it possible to analyze binary messages based on that local data format.

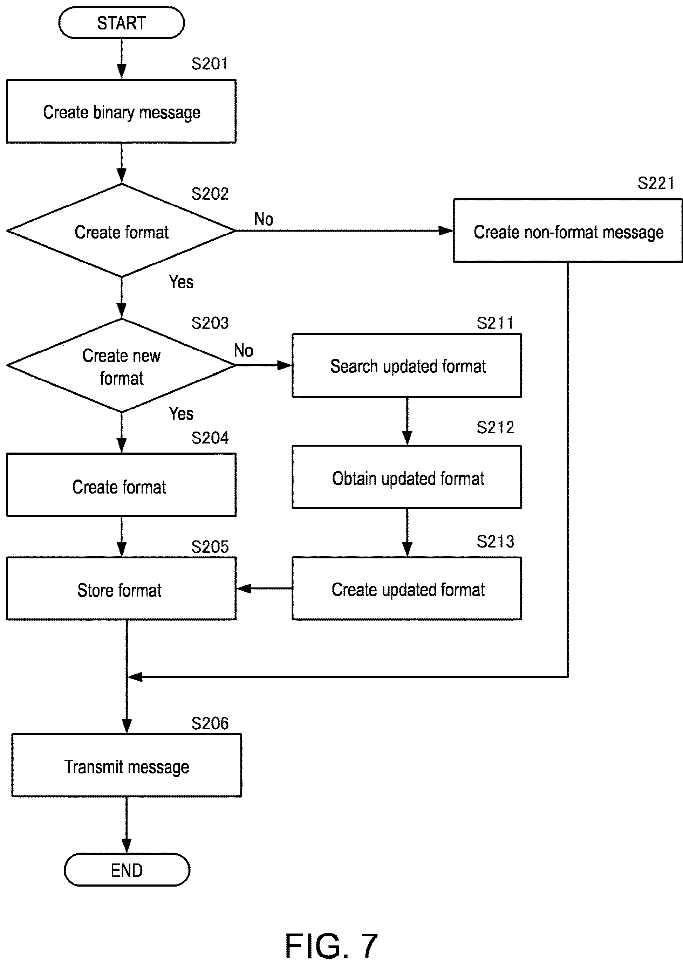

FIG. 7 is a flowchart showing a case where a binary message among AIS messages is created and transmitted according to the first embodiment of the disclosure.

The AIS transmission device 30 starts creating a binary message (S201). Next, based on user operation, whether the message to be created is a format message or a non-format message (S202) is determined. In the case of creating a format message (S202: Yes), the AIS transmission device 30 determines whether to create a new local data format (S203). In the case of creating a new local data format (S203: Yes), a format (S204) is created and the created format (S205) is stored. The AIS transmission device 30 transmits an AIS message that is a binary message including the stored local data format (S206).

In the case of creating a format message by updates and uses an existing local data format without creating a new format (S203: No), the AIS transmission device 30 searches for the corresponding existing local data format (S211). The AIS transmission device 30 obtains the existing local data format (S212). The AIS transmission device 30 updates and creates the local data format by updating a part of the existing local data format (S213). Then, it stores the created format (S205). The AIS transmission device 30 transmits an AIS message that is a binary message including the stored local data format (S206).

On the other hand, in the case where the message to be created is a non-format message (S202: No), the AIS transmission device 30 creates a non-format message based on the local data format (S221). The AIS transmission device 30 transmits an AIS message that is the created non-format message (S206).

By using this configuration and processing, the AIS reception device 10 included in the waterborne vehicle 100 and the AIS transmission device 30 included in the base station 20 may transmit and receive AIS messages corresponding to the local data format. Furthermore, the AIS reception device 10 may utilize new local data formats without introducing equipment corresponding to the new local data formats.

### (Second Embodiment)

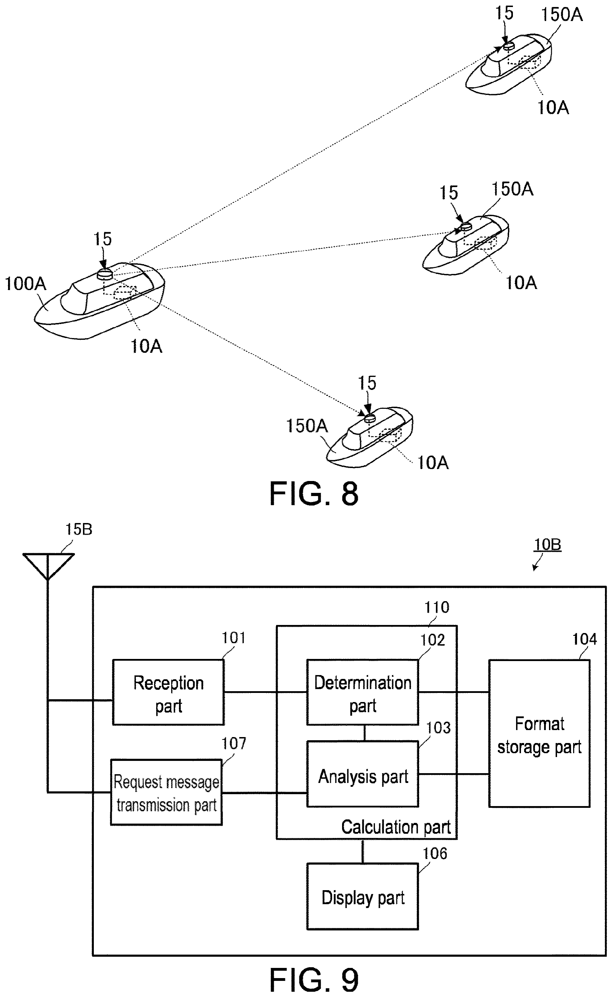

The navigation information transmission and reception system according to the second embodiment of the disclosure will be described with reference to the figures. FIG. 8 is a diagram showing an overview of message transmission and reception by a navigation information transmission and reception device included in a waterborne vehicle according to the second embodiment of the disclosure. The following description is about AIS, but it may also be applied to VDES (VHF Data Exchange System).

A waterborne vehicle 100A includes an AIS transmission and reception device 10A. The AIS transmission and reception device 10A includes both transmission and reception functions; that is, the functions of the AIS reception device 10 and the AIS transmission device 30 according to the first embodiment.

As shown in FIG. 8, the AIS transmission and reception device 10A of the waterborne vehicle 100A transmits a format message that records the local data format in the binary data of the AIS message, and the AIS transmission and reception device 10A of a waterborne vehicle 150A receives this format message. Then, the AIS transmission and reception device 10A of the waterborne vehicle 100A transmits a non-format message, and the AIS transmission and reception device 10A of the waterborne vehicle 150A receives this non-format message.

By using this configuration, binary messages may also be transmitted and received based on the local data format using the binary data of AIS messages.

In addition, while the transmission of AIS messages by the AIS transmission and reception device 10A of the waterborne vehicle 100A has been described, the AIS transmission and reception device 10A of the waterborne vehicle 150A may also transmit AIS messages. Moreover, the same applies to the reception of AIS messages. Furthermore, waterborne vehicles 150A may also transmit and receive AIS messages among themselves.

### (Third Embodiment)

The navigation information reception device according to the third embodiment of the disclosure will be described with reference to the figures. FIG. 9 is a functional block diagram of an AIS reception device according to the third embodiment of the disclosure. The following description is about AIS, but it may also be applied to VDES (VHF Data Exchange System).

As shown in FIG. 9, an AIS reception device 10B according to the third embodiment differs from the AIS reception device 10 according to the first embodiment in that it includes a request message transmission part 107. The other configurations of the AIS reception device 10B are the same as those in the first embodiment, and descriptions of similar parts are omitted.

As shown in FIG. 9, the AIS reception device 10B includes a reception part 101, a calculation part 110, a format storage part 104, and a request message transmission part 107. The calculation part 110 includes a determination part 102 and an analysis part 103. Additionally, the AIS reception device 10B is connected to an antenna 15B.

The request message transmission part 107 creates and transmits a transmission request message in a local format and transmits it.

In the case where a corresponding local data format is not found during the search and analysis of the format message, the calculation part 110 instructs the request message transmission part 107 to perform the transmission request of the format message of the AIS message. The request message transmission part 107 transmits the transmission request of the format message via the antenna 15B. In response to receiving the transmission request message, the AIS transmission device 30 transmits an AIS message that is a format message.

With this configuration, by making a request to transmit and receive the format message, the AIS reception device 10B may receive the desired format message in a timely manner, regardless of the format message transmission timing of the AIS transmission device 30.

### [Terms]

Not all objectives or effects/advantages described in this specification may necessarily be achieved according to any particular embodiment. Therefore, for example, those skilled in the art would recognize that specific embodiments may be configured to operate so as to achieve or optimize one or more of the effects/advantages taught or suggested in this specification without necessarily achieving other objectives or effects/advantages taught or suggested herein.

All processes described in this specification may be embodied in, and fully automated by, software code modules executed by one or more computers or processors included in a computing system. The code modules may be stored in any type of non-transitory computer-readable medium or other computer storage device. Some or all of the methods may be embodied in specialized computer hardware.

It is clear from this disclosure that there are many other variations other than those described herein. For example, depending on the embodiment, certain operations, events, or functions of any of the algorithms described herein may be performed in a different sequence, may be added, merged, or eliminated completely (e.g., not all described acts or events are necessary for the practice of the algorithm). Moreover, in certain embodiments, operations or events may be performed concurrently, e.g., through multi-threaded processing, interrupt processing, or multiple processors or processor cores or on other parallel architectures, rather than sequentially. In addition, different tasks or processes may also be performed by different machines and/or computing systems capable of functioning together.

Various illustrative logical blocks and modules described related to the embodiments disclosed herein may be implemented or performed by a machine, such as a processor. The processor may be a microprocessor but alternatively, the processor may be a controller, microcontroller, or state machine, or combinations thereof. The processor may include electrical circuitry configured to process computer-executable commands. In another embodiment, a processor includes an Application Specific Integrated Circuit (ASIC), a Field Programmable Gate Array (FPGA), or another programmable device that performs logic operations without processing computer-executable commands. The processor may also be implemented as a combination of computing devices, e.g., a combination of a digital signal processor (digital signal processing device) and a microprocessor, multiple microprocessors, one or more microprocessors in conjunction with a DSP (Digital Signal Processor) core, or any other such configuration. Although described primarily with respect to digital technology, a processor may also include primarily analog components. For example, some or all of the signal processing algorithms described herein may be implemented in analog circuitry or mixed analog and digital circuitry. A computing environment may include any type of computer system, including, but not limited to, a microprocessor, a mainframe computer, a digital signal processor, a portable computing device, a device controller, or a computer system based on a computational engine in a device.

Unless specifically stated otherwise, conditional language such as "capable of," "can," "might" or "may" is generally understood in the context used to convey that certain embodiments include particular features, elements and/or steps, while other embodiments do not include them. Therefore, such conditional language generally does not imply that features, elements and/or steps are necessarily required in any manner for one or more embodiments, or that one or more embodiments necessarily include logic for deciding whether these features, elements and/or steps are included or performed in any particular embodiment.

Disjunctive language such as the phrase "at least one of X, Y, or Z," unless specifically stated otherwise, is generally understood in the context used to indicate that an item, term, etc., may be either X, Y, or Z, or any combination thereof (e.g., X, Y, and/or Z). Thus, such disjunctive language is not generally intended to imply that certain embodiments require at least one of X, at least one of Y, and at least one of Z to each be present.

Any process descriptions, elements, or blocks in the flowcharts described in this specification and/or shown in the attached drawings should be understood as potentially representing modules, segments, or portions of code which include one or more executable commands for implementing specific logical functions or elements in the process. Alternative implementations are included within the scope of the embodiments described herein in which elements or functions may be removed from that shown in figures or described substantially concurrently or in reverse order, and executed in different order depending on the functionality involved, as would be understood by those skilled in the art.

Unless explicitly stated otherwise, numerical terms such as "one" should generally be interpreted to include one or more of the described items. Therefore, phrases such as "one device configured to..." are intended to include one or more of the listed devices. Such one or more listed devices may also be collectively configured to perform the described recitations. For example, "a processor configured to perform the following A, B, and C" may include a first processor configured to perform A and a second processor configured to perform B and C. In addition, even if a specific number of examples introduced is explicitly enumerated, those skilled in the art should interpret that such enumeration typically means at least the enumerated number (e.g., the mere recitation of "two enumerations" without other modifiers typically means at least two enumerations, or two or more enumerations).

In general, the terms used in this specification are generally understood by those skilled in the art to be intended as "non-limiting" terms (e.g., the term "include" should be interpreted as "not only... but at least include," the term "have" should be interpreted as "have at least," and the term "include" should be interpreted as "include the following but not limited thereto" etc.).

For the purpose of explanation, the term "horizontal" as used in this specification is defined as a plane parallel to the plane or surface of the floor of the area in which the described system is used, or the plane in which the described method is performed, regardless of its orientation. The term "floor" may be replaced with the terms "ground" or "water surface". The term "vertical/perpendicular" refers to a direction normal/perpendicular to the defined horizontal line. Terms such as "upper", "lower", "below", "above", "side", "higher", "lower", "upward", "over", "under", etc. are defined in relation to the horizontal plane.

The terms "attach", "connect", "couple", and other related terms as used in this specification should be interpreted to include removable, movable, fixed, adjustable, and/or detachable connections or couplings, unless otherwise noted. The connection/coupling includes direct connections and/or connections having intermediate structures between the two described components.

Unless explicitly stated otherwise, terms such as "approximately", "about", and "substantially" preceding a number as used in this specification include the enumerated number and also represent quantities close to the stated amount that perform the desired function or achieve the desired result. For example, "approximately", "about", and "substantially" refer to values less than 10% of the stated numerical value, unless explicitly stated otherwise. As used in this specification, embodiments disclosed with terms such as "approximately", "about", and "substantially" preceding them represent features that have some variability that further perform the desired function or achieve the desired result for that feature.

Many modification examples and modifications may be added to the above-described embodiments, and their elements should be understood to be among other acceptable examples. All such modifications and variations are intended to be included within the scope of this disclosure and are protected by the following claims.

### [Reference Signs List]

10...AIS reception device
10A...AIS transmission and reception device
10B...AIS reception device
15,15B...Antenna
20...Base station
25...Antenna
30...AIS transmission device
100, 100A, 150A...Waterborne vehicle
101...Reception part
102...Determination part
103...Analysis part
104...Format storage part
105...Data processing part
106...Display part
107...Request message transmission part
110...Calculation part
201...Operation part
202...Format message creation part
203...Non-format message creation part
204...Transmission control part
205...Storage part
206...Transmission part
210...Message creation part

## Claims

1. A navigation information reception device, comprising:
a reception part configured to receive a navigation information message;
a determination part configured to determine whether the received navigation information message is a format message or a non-format message;
a format storage part configured to store format information included in the navigation information message in a case where the received navigation information message is determined to be the format message; and
an analysis part configured to analyze content of the navigation information message based on the stored format information in a case where the received navigation information message is determined to be the non-format message and where the format information is stored.

2. The navigation information reception device according to claim 1,
wherein the format information is a local data format agreed upon for exchanging information within a specific region.

3. The navigation information reception device according to claim 1 or claim 2,
wherein the format storage part stores new format information in a case where the stored format information differs from the new format information included in the newly received navigation information message.

4. The navigation information reception device according to claim 1 or claim 2, further comprising:
a request message transmission part configured to transmit a transmission request message for the corresponding format message in a case where the format information corresponding to the received non-format message is not stored in the format storage part.

5. The navigation information reception device according to claim 1 or claim 2, further comprising:
a display part configured to display the non-format message analyzed by the analysis part.

6. The navigation information reception device according to claim 1 or claim 2,
wherein the navigation information message is a binary message of an AIS message.

7. The navigation information reception device according to claim 6,
wherein the determination part is configured to determine based on a message identifier included in the binary message.

8. The AIS reception device according to claim 6,
wherein the determination part configured to determine based on an identifier included in a binary data part of the binary message.

9. A navigation information transmission device, comprising:
a format storage part configured to store format information included in a format message;
a message creation part configured to create a navigation information message comprising a format message including the format information, and a navigation information message comprising a non-format message recorded based on the format information; and
a transmission part configured to transmit respectively the navigation information message comprising the format message and the navigation information message comprising the non-format message.

10. The navigation information transmission device according to claim 9,
wherein the transmission part periodically transmits the navigation information message comprising the format message.

11. A navigation information transmission and reception system, comprising:
the navigation information reception device according to claim 1; and
the navigation information transmission device according to claim 9,
wherein the navigation information reception device receives the navigation information message transmitted by the navigation information transmission device.

12. The navigation information transmission and reception system according to claim 11,
wherein the navigation information reception device is to be installed on a ship.

13. The navigation information transmission and reception system according to claim 11,
wherein the navigation information transmission device is to be installed on a land-based base station or a ship.

14. A navigation information reception method, comprising:
receiving a navigation information message;
determining whether the received navigation information message is a format message or a non-format message;
storing format information included in the navigation information message in a case where the received navigation information message is determined to be the format message; and
analyzing content of the non-format message based on the format information in a case where the received navigation information message is determined to be the non-format message and where the format information is stored.

15. A navigation information transmission method, comprising:
storing format information included in a format message;
creating a navigation information message comprising the format message recording the format information, and a navigation information message comprising a non-format message recorded based on the format information; and
transmitting respectively the navigation information message comprising the format message and the navigation information message comprising the non-format message.

16. A navigation information reception program for causing calculation processing device to execute:
a process of receiving a navigation information message;
a process of determining whether the received navigation information message is a format message or a non-format message;
a process of storing format information included in the navigation information message in a case where the received navigation information message is determined to be the format message; and
a process of analyzing content of the non-format message based on the format information in a case where the received navigation information message is determined to be the non-format message and where the format information is stored.

17. A navigation information transmission program for causing calculation processing device to execute:
a process of storing format information included in a format message;
a process of creating a navigation information message comprising the format message including the format information, and a navigation information message comprising a non-format message recorded based on the format information; and
a process of transmitting respectively the navigation information message comprising the format message and the navigation information message comprising the non-format message.
